# EUROPEAN PATENT APPLICATION

(11) **EP 1 056 065 A2**
(43) Date of publication of application: **29.11.2000**
(21) Application number: 00201830.7
(22) Date of filing: 25.05.2000
(51) Int. Cl.: G09B 21/00

(54) **Method and system for providing accessibility to financial services for visually impaired persons**

(30) Priority: 28.05.1999 US 136540 P; 24.09.1999 US 155854 P
(71) Applicant: Citicorp Development Center, Inc., Los Angeles, California 90066 (US)
(72) Inventor: Grandcolas, Michael L., Santa Monica, California 90034 (US); Doshi, Ashwin, Cerritos, California 90703 (US); Law, Patrick, Los Angeles, California 90034 (US); Pfnell, Nigel, Santa Monica, California 90405 (US)
(74) Representative: Hynell, Magnus

(57) **Abstract**

A method and system for delivering financial services, such as home banking services, to visually impaired persons utilizes a computing device, such as a personal computer with a screen reading device, coupled, for example, to a home banking server. A templating scheme assures that the delivery of information in a financial institution's home banking product can be easily and efficiently read for a visually impaired person by the screen reading device. The templating scheme also simplifies overall navigation of the home banking product, so that it is easy for the visually impaired person to navigate to different functionalities.

## Description

### Cross Reference to Related Applications

This application claims priority to applicant's co-pending application having U.S. Serial No. 60/136,540 filed May 28, 1999 and applicant's co-pending application having U.S. Serial No. 60,155,540 filed September 24, 1999.

### Field of the Invention

The present invention relates generally to the field of electronic commerce, and more particularly, to a method and system for providing accessibility to financial services, such as home banking services, for visually impaired persons.

### Background of the Invention

The usability of computer software, such as home banking software, is problematic for someone who is visually impaired. The delivery, for example, of a browser based home banking product to a person that is visually impaired presents unique challenges to a financial institution, such as a bank. It is not so much a challenge to create a product that solves the problem, but rather a challenge to the deliverer of the information to package that information so that it can be easily read, for example, by a screen reader for the visually impaired person.

### Summary of the Invention

It is a feature and advantage of the present invention to provide a method and system for making financial services accessible to visually impaired persons that presents a consistent style to a home banking interface which offers the best usability within the performance constraints of the current Internet delivery platform.

It is a further feature and advantage of the present invention to provide a method and system for making financial services accessible to visually impaired persons which enables delivery of information in a financial institution's home banking product that can be easily and efficiently read by a screen reader for a visually impaired person.

It is another feature and advantage of the present invention to provide a method and system for making financial services accessible to visually impaired persons which simplifies the overall navigation of a financial institution's home banking product, so that it is easy for a visually impaired person to navigate to different functionalities.

It is an additional feature and advantage of the present invention to provide a method and system for making financial services accessible to visually impaired persons which enables delivery of the financial institution's home banking product for a visually impaired person only with templating scheme changes and without changing the home banking application.

To achieve the stated and other features and advantages, an embodiment of the present invention provides a method and system for providing accessibility of financial services, such as home banking services, to visually impaired persons which makes use of a templating scheme to assure that the delivery of information in a financial institution's home banking product can be easily and efficiently read for a visually impaired person by screen reader products that are readily available in the marketplace. In addition, an embodiment of the present invention makes use of the templating scheme to simplify the overall navigation of the financial institution's home banking product, so that it is easy for a visually impaired person to navigate to different functionalities.

The system and method for an embodiment of the present invention utilizes, for example, a terminal or computing device, such as a personal computer (PC) or an automatic teller machine . The PC is coupled to a home banking server over a network, such as a global network, and the automatic teller machine is coupled to a host server likewise over a network, such as a global network. In addition, an embodiment of the present invention makes use of a screen reading device. Financial services information is displayed on a display screen of the terminal in text readable by the screen reading device for the user, arranged in such a way as to be readable by the screen reading device in a pre-defined rational sequence for the user.

In an embodiment of the present invention, the text is arranged to be readable by the screen reading device, for example, by displaying all controls in the financial services information exclusively in text readable by the screen reading device. In other words, the text is arranged to be read by the screen reading device to make semantic sense to the user. For example, the displayed text is arranged to be read by the screen reading device in one or both of a top to bottom and a left to right sequence on the display screen. Further, displayed text consisting of a drop down list with a command is arranged such that the command is read for the user by the screen reading device in advance of the drop down list. In addition, portions of the displayed text consisting of an input field with a textual label are arranged to associate the textual label with the input field for the user when read by the screen reading device, such as by arranging the textual label to the left of the input field. Additionally, hyphens and parentheses are omitted from the displayed text.

The method and system for an embodiment of the present invention provides a single, consistent navigation scheme for the visually impaired user to navigate the displayed financial services information. A minimum number of frames are displayed on the display screen for the user. For example, a single frame layout is used, or alternatively a two-frame layout can be used which consists of a navigation frame and a work area frame. The two-frame layout consists of a top navigation frame and a bottom work area frame on the display screen. The navigation scheme includes, for example, a navigation bar, and/or a link to a main menu, and/or a link for sign off. The navigation scheme also positions, for example, one or both of the link to the main menu and the link for sign off at the top of the display screen.

In an embodiment of the present invention, the visually impaired user can enter selections related to the displayed financial services information, which selections are received for the user at the terminal via an input field of the displayed text and an input device of the terminal, such as a keyboard input device. Further, the visually impaired user's selections are received via the input field exclusively with keyboard commands on the keyboard input device. The user can enter selections related to the displayed financial services information for any of a number of tasks, such as signing on for a session, verifying clearance of a check, scheduling a transfer of funds, paying a bill, and ending a session. An important aspect of an embodiment of the present invention, is the provision of financial services, such as home banking services, for visually impaired users without changing any applications offered for sighted persons, but instead changing only the templating scheme that is used for sighted persons.

Additional objects, advantages, and novel features of the invention will be set forth in part in the description which follows, and in part will become more apparent to those skilled in the art upon examination of the following, or may be learned by practice of the invention.

### Brief Description of the Drawings

Fig. 1 is a schematic diagram which illustrates an overview of an example of key components and the flow of information between the key components of a system for providing access to financial services to visually impaired persons for an embodiment of the present invention;
Fig. 2 is a table which illustrates examples of recommendations derived from the usability issues which are addressed by features of an embodiment of the present invention;
Fig. 3 is a table which illustrates examples of primary causes of user error which are addressed by an embodiment of the present invention;
Fig. 4 is a table which illustrates examples of basic rules or standards utilized in an embodiment of the present invention;
Fig. 5 shows a sample of a screen with "radio button" controls for an embodiment of the present invention;
Fig. 6 shows an example of a screen with square check box controls for an embodiment of the present invention; and
Fig. 7 is a flow chart which illustrates an example of the process of delivering financial services information to a user at a PC with a screen reading device for an embodiment of the present invention.

### Detailed Description

Referring now in detail to an embodiment of the present invention, an example of which is illustrated in the accompanying drawings, the present invention provides a solution to the problem of assuring that financial services products, such as a financial institution's home banking product, works with a normally available screen reader of a type that visually impaired persons use with other applications. An example of such a screen reader product that is in common use is a product called JAWS that is offered by a company called Henter-Joyce. The JAWS screen reader product, as well as screen reader products offered by other companies, is a commonly used product that enables visually impaired persons to use computer software.

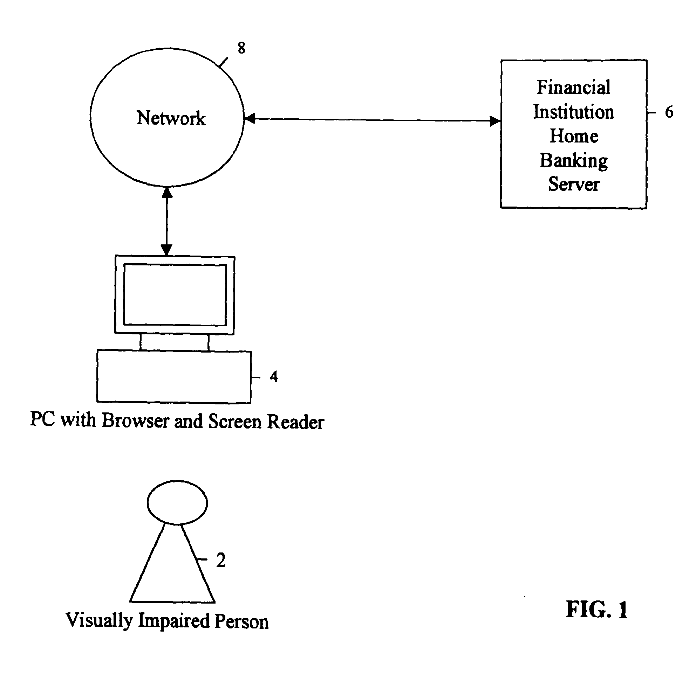

Fig. 1 is a schematic diagram which illustrates an overview of an example of key components and the flow of information between the key components of a system for providing access to financial services to visually impaired persons for an embodiment of the present invention. Referring to Fig. 1, in an embodiment of the present invention a visually impaired user 2 uses a personal computer (PC) 4 with a browser to access the financial institution's home banking server 6 over a network 8, such as the Internet, and is able to sign on and perform various home banking transactions with the use of a screen reader application.

An embodiment of the present invention provides a solution to this problem which involves a number of aspects. One aspect of an embodiment of the present invention assures that the delivery of information in the financial institution's home banking product can be easily and efficiently read by a screen reader product, such as the Henter-Joyce JAWS screen reader product, as well as by other screen reader products available in the marketplace.

Another aspect of an embodiment of the present invention simplifies the overall navigation of the financial institution's home banking product so that it is easy for the sight impaired person 2 to navigate to different functionalities. This is accomplished by an embodiment of the present invention without changing any of the applications offered to a sighted person, but instead by changing, for example, only the templating scheme that is used in the home banking product for a sighted person.

For example, in an embodiment of the present invention, everything in the home banking product is provided in text, and any graphics that are originally in the product are replaced by text. The reason for this is that screen readers typically do not do a good job with graphics, because, for example, they are not able to read text that is on the graphics, and they do not necessarily always do a very good job with "Alt" text that is in graphics. Therefore, an embodiment of the present invention creates a virtually text-only delivery of information.

Another way in which an embodiment of the present invention assures that a home banking product is easily and efficiently readable by a screen reader product recognizes that screen readers read from top to bottom and left to right. Therefore, in an embodiment of the present invention, screens are laid out in such a way that the text makes semantic sense when it is read by the screen reader. In addition, special care is taken in the way that information is laid out, so that it makes semantic sense when it is read for the visually impaired person 2. Further, the number of frames in the product is minimized to avoid certain problems that the number of frames in the product presents to screen readers. Additionally, there are very specific matters related to colors and placing labels next to fields, as well as other matters which are described herein in greater detail.

An additional way in which an embodiment of the present invention assures that a home banking product is easily and efficiently readable by a screen reader product is that in drop down lists, the first thing in the drop down list is a command. For example, in a drop down list of accounts, the first thing in the drop down list is, in fact, something that says "Select an account," so that when the screen reader navigates to that particular field, the user 2 is aware of what the user 2 is supposed to do with that field.

Additionally, in an embodiment of the present invention, labels are placed to the left of input fields and not above them, so that it makes semantic sense when read by the screen reader for the visually impaired person 2. In other words, the label and the input field are aligned left-to-right, so that when the screen reader reads them, they are read as a pair, and if there is a blank field that requires an input or selection, the label is just to the left of the blank field. For example, for an address or a telephone number, the label is just to the left of the blank field. Otherwise, the user 2 has no idea of the context of the input or selection field.

Another aspect of an embodiment of the present invention relates to simplifying overall navigation for the sight impaired person 2. In this aspect, overall navigation is simplified, for example, by creating a new navigation bar for the non-sighted user 2. On the log on screen, there is a simple set of controls, such as a special link that tells the user 2 that if the user 2 clicks on the particular link, the user 2 can use it with the screen reader. That is one of the first things that is done on the very first page. Then, on all subsequent pages, the user 2 is presented with a simple main menu.

In an embodiment of the present invention, the user 2 navigates the financial institution's home banking product typically only with keyboard commands, the two most common of which are the 'tab' key, that takes the user 2 to different selections, and the 'enter' key to actually select an item. As the user 2 tabs, the screen reader essentially goes to the next link or the next item on the screen and reads it to the user 2 and tells the user 2, for example, whether it is a link or an input field or some kind of selection field. In this aspect of an embodiment of the present invention, on the top of every screen there is one link for main menu and one link for sign-off.

The foregoing is a simplification of the kind of overall navigation scheme that is provided by an embodiment of the present invention for both unsighted customers and sighted customers. Typically, the navigation scheme is not particularly complex for a sighted person, but it is more complex for the non-sighted person 2 with regard to the number of channels or options, in terms of functionality. An embodiment of the present invention provides just one simple link for main menu and one link for sign-off on the top of every screen. In this way, the user 2 is always grounded and always knows that the first two things the user 2 will hear is those kinds of links.

An embodiment of the present invention assures, for example, that a financial institution's home banking product is easily and efficiently usable with a screen reader and simple to navigate for the visually impaired person 2. Tests were conducted for the use of embodiments of the present invention by people that are sight impaired. The features and advantages of an embodiment of the present invention were readily apparent from the test results. While there is no formal certification process, for example, for compliance with requirements of the Americans With Disabilities Act (ADA), the test results indicate that, in every practical sense, the method and system for an embodiment of the present invention has great usefulness to visually impaired persons.

The tests were performed using PCs, the JAWS screen reader application, and the Internet Explorer browser. Participants in the test had no prior training, and the test was their first hands-on experience with a home banking software program. Usability issues for visually impaired persons discovered in the tests include, for example, that multiple frames make the banking application difficult to navigate; that when, for example, an account activity screen first loads, if a user does not allow the JAWS reader to read the whole screen, the user never realizes that a transaction journal is being displayed on the screen; that redundant information on the screen makes it more difficult to navigate; and that links and buttons must be adequately descriptive for a visually impaired person.

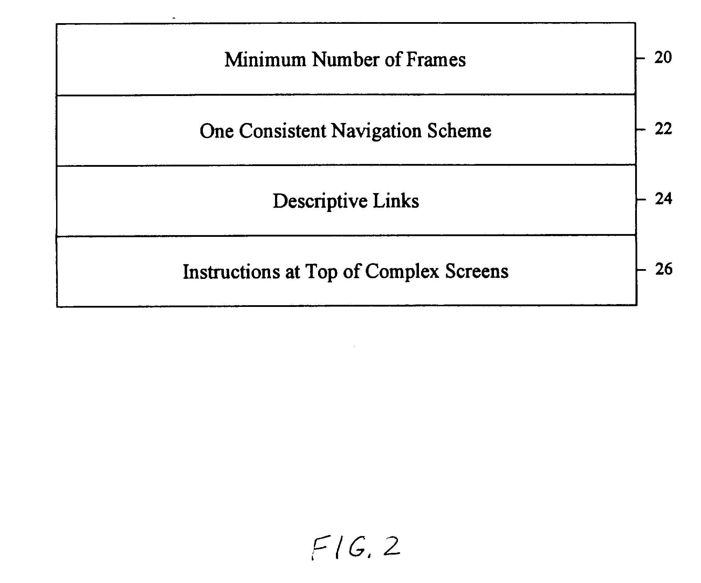

Fig. 2 is a table which illustrates examples of recommendations derived from the usability issues which are addressed by features of an embodiment of the present invention. Such recommendations include, for example, minimizing the number of frames 20, using one consistent navigation scheme 22, making links more descriptive 24 (i.e., assume that users will not allow the JAWS reader to read the whole screen), and adding instructions to the top of complex screens 26.

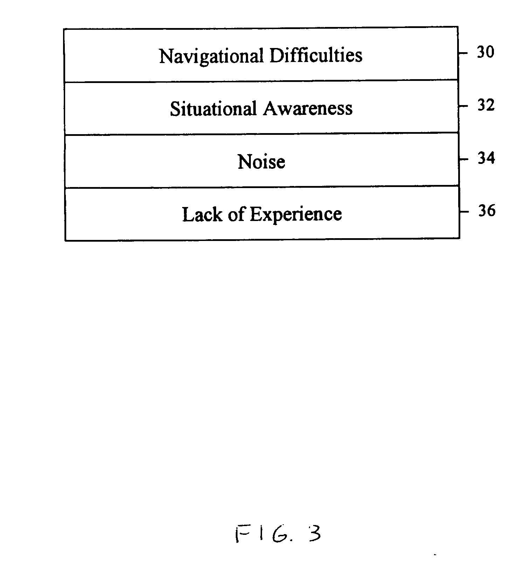

Fig. 3 is a table which illustrates examples of primary causes of user error which are addressed by an embodiment of the present invention. A majority of the errors and task failures were caused, for example, by one or more of navigating difficulties 30, situational awareness 32, noise 34, and/or lack of experience 36 with the PC, the JAWS screen reader, and/or the Web. With respect to navigating difficulties 30, frames caused problems for both experienced and inexperienced users. To address this issue, an embodiment of the present invention, minimizes the number of frames and uses one consistent navigation scheme.

To address the situational awareness issue 32, an embodiment of the present invention makes links more descriptive, on the assumption that users will not let JAWS read the whole screen, and adds instructions to the top of complex screens. Noise 34 is defined as everything that distracts the user from his or her task. To address the noise issue 34, an embodiment of the present invention removes unnecessary information and links from each screen and minimizes the number of frames.

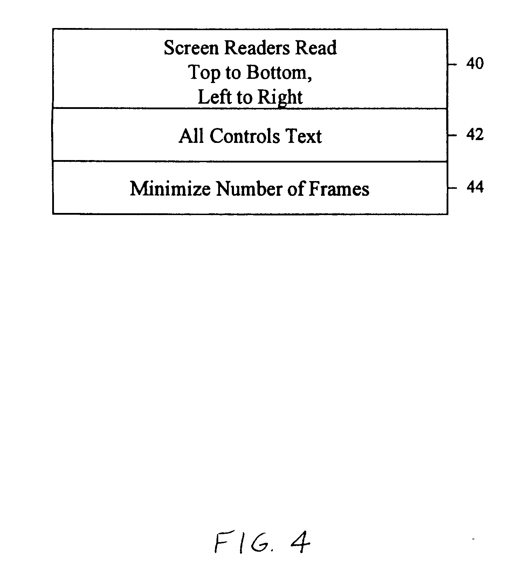

Rather than exhaustively theorizing over techniques required to deliver an ADA complaint product over the Internet, an embodiment of the present invention makes use of basic rules derived from practical information gained from experience. Fig. 4 is a table which illustrates examples of basic rules or standards utilized for an embodiment of the present invention. These basic rules include, for example, that screen readers should read top to bottom and left to right 40, that all controls should be text 42, and that the number of frames should be minimized 44.

For example, in an embodiment of the present invention, screens are laid out in such a way that text makes semantic sense when read by a screen reader. The screen reader reads text moving from the top to the bottom across the visible page, and moving left to right across a line. For another example, in an embodiment of the present invention, all links are text. All 'submit' buttons are standard Hypertext Markup Language (HTML) submit buttons rather than image buttons. Typically, screen readers cannot read the text on graphic images like Graphics Interchange Formats (GIFs) and Joint Photographic Experts Group formats (JPGs).

For a further example of use of basic rules or standards in an embodiment of the present invention, while a single frame is best, when that is not practical or possible, the number of frames is at least minimized. If a single frame implementation is not possible, a two-frame layout is the next best choice. A two-frame layout with a simple "layer-cake" approach, with the top frame being the navigation frame and the bottom frame being the work area frame, works best.

In an embodiment of the present invention, a single frame is presented to the user. The 'Main Menu' and 'Sign-Off' links are presented at the top of each screen displayed. A main menu of available channels is displayed as a home screen in the presentation. The prompt on this screen, for example, is "Which may I help you with?" Sign-on server screens are also displayed using a single frame with the sign-on links located at the top of pages, above such items as Frequently Asked Questions (FAQs), test-drive links, and marketing copy.

In an embodiment of the present invention, hyphens are not used in phrases, such as "Sign On" and "Sign Off', since they are verbalized as "dash" by the Henter-Joyce JAWS screen reader. Similarly, parentheses are spoken as "left-paren" and "right-paren" by the screen reader and are removed where practical. Although grammatical contractions are not spoken well either (e.g., "I'm" is verbalized as "I-apostrophe-m ready"), they can for example, if their removal adversely impacts some other aspect.

Hypertext links that point to anchors in the current page are removed in the presentation for an embodiment of the present invention, as the screen reader remains silent when they are followed and tends to skip beyond the desired point in the page. Text is added to the top of account information screens that describes the information presented for visually impaired users. While the purpose and content of the statement-like layout is readily apparent to a sighted user, the sudden delivery of balance and activity information can be disconcerting via audio, and may lead visually impaired users to interrupt the screen reader before they are aware of the full content of the screen. Similarly, many input screens also benefit from a more verbose prompt when presented by a screen reader.

An embodiment of the present invention also recognizes certain parameters, relating for example, to the use of colors, a 'Go To' control, branding, input and selection fields, and list selection controls. With regard to the use of colors, white backgrounds in HTML table cells cause problems with screen reader utilities and are preferably not used in an embodiment of the present invention. Colored header bars are not used in the presentation for an embodiment of the present invention, since they create poor contrast with the 'Main Menu' and 'Sign-Off' hypertext links.

Preferably, a 'Go To' control is omitted from the presentation for an embodiment of the present invention, because it is confusing to a non-sighted user. The 'Go To' (i.e. drop-down menu) control offers an alternative method of navigation directly to each specific function. When a function is selected, redundant visual cues in the channel and task bars serve to indicate where the item is located in the overall layout. The "Go To" control duplicates the channel/menu structure of the application as a pulldown list control on the toolbar, allowing a user to scan the entire set of available functions at once and pick the one to which the user wants to navigate. Instead of the 'Go To' control, a 'Main Menu' screen is used in an embodiment of the present invention, and every screen has a link back to the 'Main Menu' screen.

With regard parameters related to branding, in the presentation for an embodiment of the present invention the name of the financial institution in the Arial/Helvetica typeface with a size attribute of two and the bold attribute on can be displayed, for example, instead of a graphic. The financial institution transaction screens can also contain contact information below the work area form, left-justified with a size attribute of one.

With respect to parameters related to input and selection fields for an embodiment of the present invention, whenever more than one input control appears in the work area at any time, each is explicitly labeled with text to the left or immediately above it. If more than one control appears on a row, each has a label to its left instead of above it. The first input or selection field on a form is given the application focus by the page's onload event, so that the user does not have to explicitly click in it to enter or select data. Recap (a.k.a. "Go Ahead?") dialog boxes are presented before executing a financial transaction to mark the point of no return.

Regarding parameters related to list selection controls for an embodiment of the present invention, when a user must make a single selection from a series of values in a transaction form, the choices are either presented as a pull-down list or as a series of circular "radio button" controls. Radio buttons are more appropriate for a small, fixed number of options and, where other input is dependent on the selection of an item. For compatibility with screen reader utilities, other input fields appear at the end of the radio button label. The first value in a pull-down list control is a prompt or descriptor, followed by an ellipsis, such as 'Select an account...' or 'Payment options...' When a user is offered multiple selections from a series of values, square check box controls are used where possible.

An aspect of an embodiment of the present invention is the compiling of standards and guidelines for the financial institution's visually impaired persons home banking product. These standards and guidelines present a consistent style to the home banking interface, which offers the best possible usability within the performance constraints of the current Internet delivery platform and addresses ADA requirements for access by visually impaired users via screen reader utilities.

In an embodiment of the present invention, a single frame is presented to the user, although a control frame is also necessary for cross-process communications. The 'Home' and 'Sign-Off' links are presented at the top of each screen displayed. The 'Home' link is renamed 'Main Menu' to be more meaningful to sight-impaired users. A main menu of available channels is displayed as a home screen in the presentation for an embodiment of the present invention. The prompt on this screen, for example, is "Which may I help you with?". Sign-on server screens are also displayed using a single frame with the 'Sign-On' links located at the top of pages, above such items as FAQs, test drive links, and marketing copy.

In an embodiment of the present invention, hyphens are not used in phrases (particularly "Sign On" and "Sign Off), since they are verbalized as "dash" by at least the industry leading screen reader. Similarly, parentheses are spoken as "left-paren" and "right-paren" by the utility and are removed where possible. Hypertext links that point to anchors in the current page are omitted from the presentation, as the screen reader remains silent when they are followed and tends to skip beyond the desired point in the page. Contractions are avoided, as they are not spoken well by the screen reader (e.g., "I'm ready" is verbalized as "I-apostrophe-m ready", and "I've made your transfer" as "I-apostrophe-vee-ee made your transfer").

In an embodiment of the present invention, the addition of some text to the account information screens that describes the information presented is a benefit to visually impaired users. While the purpose and content of the statement-like layout is readily apparent visually, the sudden delivery of balance and activity information can be disconcerting via audio. Similarly, many input screens also benefit from a more verbose prompt when presented by the screen reader. These text alternatives can be implemented in the home banking product architecture, for example, by configuring an embodiment of the present invention as a separate language.

An embodiment of the present invention makes use of buttons and links. With regard to implementation of links, all hypertext links are shown in bold text with a size attribute of two. Page attributes are set so that recently used hypertext links do not change color, since this can confuse users unfamiliar with the convention. Alternatively, links can be implemented as simple script functions which also prevent users from accidentally activating drag-and-drop features of the browser by slight movement of a mouse when clicking an item. With regard to menu bullets, bullet graphic images formerly used to afford clicking by users unfamiliar with hypertext conventions are not used for an embodiment of the present invention.

With respect to work area buttons, in an embodiment of the present invention, the main navigation controls in the work area are implemented as hypertext links rather than graphic- or HTML form buttons. Controls that perform an action but do not navigate to a different screen, such as 'Sort' or 'Search', are implemented as HTML form buttons. To maintain consistent behavior across different browsers when the 'Return' or 'Enter' key is pressed, 'Submit' buttons are not used on a form (any buttons are of the type 'button'). The 'Enter' key event can then be trapped by a script to ensure that the user must click a link to transition to the next screen.

An embodiment of the present invention utilizes navigation links. A 'Back' link is located at the bottom left corner of the work area page for all screens where the context of the function allows the user to back out (i.e., not on 'transaction confirmations', 'error' screens, and 'home' screens). If a screen contains a list of more than three items, such as transaction journal entries or payments to change, a redundant 'Back' link appears at the top of the screen above the table heading. A 'Bottom' link appears alongside it, which scrolls the window to the bottom of the page. This provides a convenient way to reach the end of the page and also provides an additional visual cue that some content is out of sight further down the page for users who do not notice the scroll bar.

In an embodiment of the present invention, on screens where the 'Bottom' link is displayed, a 'Top' link appears to the right of the 'Back' link at the bottom of the page. If a screen displays a list, and data elements received from the host indicate that more items are available to be retrieved, a 'Retrieve More' <items> link appears on the right of the page on the same row as the 'Back' link. In an embodiment of the present invention, the 'Messages' selection lists use dummy items in the list to select more or previous groups of messages.

A 'Cancel' link is located to the right of the 'Back'/'Top' links on all transaction input screens for an embodiment of the present invention, but not on information-only screens or in functions which delete or "cancel" an existing transaction, such as See, Change or Cancel Payments. When a screen's function is to cancel an existing transaction in this manner, it is labeled explicitly such as "Cancel this Payment" so that a user does not confuse it with an option to exit from the function. The 'Back' and 'Cancel' links are both shown, even when their action is redundant to each other or other navigational controls, to maintain consistent options and discourage users from invoking browser navigation methods that disrupt the application's session context. Any other links that end a transaction ("negative flow') are aligned immediately to the right of the 'Back' and 'Cancel' links.

In an embodiment of the present invention, links that proceed with or execute a transaction ("positive flow") are aligned on the right of the work area. Prior to the final recap screen, these buttons are labeled 'Next', and on the recap screen the final button is specifically labeled for the transaction, such as "Make This Transfer' or "Change This Payment". If the links at the bottom of the work area do not fit in the available width, the main positive flow buttons are displayed to the center of the row above. If a single link appears on a screen, such as the 'OK' link on an error screen, it is placed in the center of the work area. When 'Yes' and 'No' links are offered in response to a prompt, they are separated from the prompt by a space equivalent to no more than two blank lines of the prompt text, and not positioned at the bottom of the screen. The confirmation screens for commonly used transactions have a link to quickly perform the function again, such as a 'Make Another Transfer' link .

Home screens for an embodiment of the present invention include, for example, a main home screen and channel menu screens. The main home screen is the first screen the user sees in the work area after successfully signing on to the application. This screen contains a menu listing the channels available in the application. The channel menu screens are the first screens the user sees in the work area after selecting a channel from the menu for an embodiment of the present invention. The channel menu screens display hypertext links for each transaction in the channel.

Screen content aspects for an embodiment of the present invention include, for example, main window text, tables, and input and selection fields. Aspects of main window text includes, for example, typeface, font size, bold text, italic text, ellipses, capitalization, product names and contact information, and passwords. With regard to the typeface aspect, all text is shown in a sans-serif font for clearest definition on low-resolution displays. Where specific typeface specifications are required, the Arial and Helvetica font names are used.

With respect to the font size aspect for an embodiment of the present invention, all text is shown with an HTML font size attribute of <2> unless otherwise specified in a prototype or APS. Prompts, labels and navigational hypertext links in the work area (but not links used to select items from a list) are shown in a bold font. Any other text is shown with normal font attributes, unless otherwise specified in a prototype or APS. Italic text is not used, as it rarely displays well at the screen resolutions currently available. Prompts on controls where a selection must be made are followed by an ellipsis (...) to indicate that the control is interactive, for example: "Select an account...".

Regarding the capitalization aspect for an embodiment of the present invention, channel names, task button names, menu items, button text and labels appearing in forms are always shown using 'Title Case' which is defined as follows: Always capitalize the first letter of the first word, and capitalize all other words except for articles "a", "an", and "the", conjunctions "or", "and, "but", "nor" and "for", and prepositions under four characters in length, unless the preposition is part of a verb phrase. Examples include: "Make a Transfer", "Make Another Transfer", "Set Up a Standing Order", and "Transfer Between My Accounts".

Referring further to the capitalization aspect for an embodiment of the present invention, any other text shown on the screen, including prompts at the top of the work space or shown as the default text in selection lists, is shown in normal sentence case, capitalizing only the first letter of the first word of a sentence, the first letter of proper nouns, and all letters of appropriate acronyms. Examples include: "Please enter your PIN", "Please enter your Bankcard number", and "Select the amount to enter ...". Financial institution names use capitalization as defined in current branding standards.

With respect to the product names and contact information aspect for an embodiment of the present invention, the name of the home banking application is stored as a variable within the application to simplify changing it as legal requirements, political trends and nomenclature fashions change. All screens showing products, information or transactions provided by the financial institution display the financial institution's name in the Arial/Helvetica typeface with a size attribute of two and the bold attribute 'on' is displayed, for example, in place of the graphic. Transaction screens also contain contact information below the work area form, left-justified with a size attribute of one. Password fields are set to accept up to 12 characters and to echo mask characters instead of the text being entered.

Regarding the tables aspect of screen content for an embodiment of the present invention, the outermost table in a screen layout has its width attribute set to 100%. This ensures that the browser wraps text within cells before resorting to horizontal scrolling of the window. A 'category total' section of the 'account summary' screen should have its width attribute set to 80%.

For the input and selection fields aspect for an embodiment of the present invention, to keep screen transition times to a minimum, the information sent to the browser for any screen does not exceed 10k. To achieve this, extensive input data validation and reformatting is performed at the server rather than by scripts executed on the client browser. This also ensures the integrity of data submitted to host applications, even if a browser script is tampered with or fails to run correctly on the user's machine.

Referring further to the input and selection fields aspect for an embodiment of the present invention, scripts are used, however, to check for empty fields where input is required and to display appropriate error messages. This can be achieved with a minimal amount of code and reduces unnecessary server traffic, while presenting faster response times for users. Whenever more than one input control appears in the work area at any time, each is explicitly labeled with text to the left or immediately above it. If more than one control appears on a row, each has a label to its left, rather than above it.

In an embodiment of the present invention, the first input or selection field on a form is given the application focus by the page's onload event, so that the user does not have to explicitly click in it to enter or select data. When a user is returned to a screen where the user has entered data and/or made selections, such as when the user clicks on a 'Back' button or dismisses an error message, the user's previous input and selections are pre-set as default values. If a user navigates out of a transaction after entering or selecting items, but without completing it, a dialog box is displayed asking the user to confirm whether the user wants to abandon the transaction. This question is very carefully worded, since most, but not all, current implementations of browsers' confirm dialog box use buttons labeled 'OK' and 'Cancel'. Examples include: "Your payment request hasn't been completed.", "If you stop now, your payment won't be processed.", "Discard this payment request? [Yes/OK] [No/Cancel ]". The established and widely accepted action of the 'Cancel' button is that the application ignores the very last user action (in this case, clicking outside the work area), so this button is not used to indicate that the transaction should be canceled. For the same reason, the word "cancel" is not used in the question.

Other aspects of the input and selection fields for an embodiment of the present invention include dates, monetary amounts, list selection controls, account selection controls, and calculated values. Dates are entered into a single field, which can optionally contain a default value supplied by the application. Dates may be entered by the customer with or without leading zeros for the month and day, and using two or four digits for the year. Permitted separators are a dash (hyphen) or slash. The order in which date values are interpreted is month, day, and year, and is based on the standard date output format for the business. When a user enters a two-digit year, it is handled using, for example, the financial institution's standard base year convention of 50 in which years less than or equal to 50 are treated as 20YY, and years greater than 50 are treated as 19YY. Regardless of user input, the date is formatted in accordance with business rules, when it is subsequently shown on recap or confirmation screens.

In an embodiment of the present invention, monetary amounts are entered into a single field, which can optionally contain a default value supplied by the application. The only non-numeric characters allowed in amount input are the decimal point and the dollar symbol. If a user enters any other character, or enters more than two digits after the decimal point, an error is displayed to ensure that thousand delimiters are not misinterpreted as decimal separators.

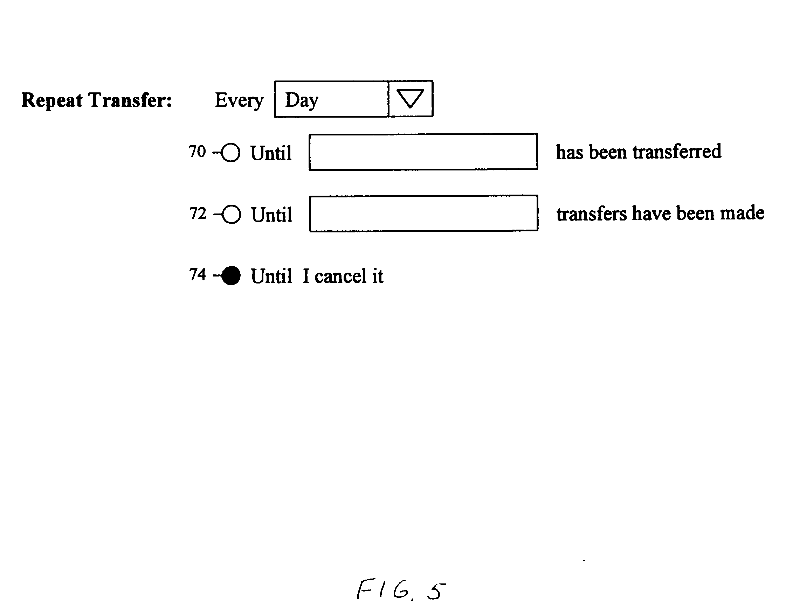

Fig. 5 shows a sample of a screen with "radio button" controls for an embodiment of the present invention. When a user must make a single selection from a series of values in a transaction form, the choices are presented as a pull-down list or a series of circular "radio button" controls 70, 72, 74. Radio buttons are more appropriate for a small, fixed number of options and, as shown in Fig. 5, where other input is dependent on the selection of an item. The first value in a pull-down list control is a prompt or descriptor followed by an ellipsis, such as 'Select an amount,..' or 'Payment options...'.

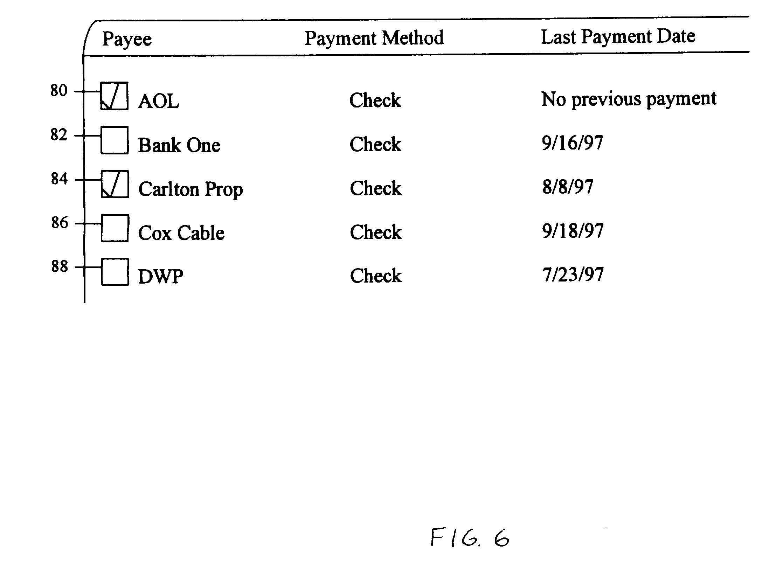

Fig. 6 shows an example of a screen with square check box controls for an embodiment of the present invention. When a user can make multiple selections from a series of values, square check box controls 80, 82, 84, 86, 88 are used where possible. Some multi-line selection list controls are configured to accept multiple selections with shift key modifiers, and instructions appear near these controls on how this is done. When selection of an item from a list results in a screen transition, such as picking a payment to change, a single data element (and not a label) in each item is tagged as a hypertext link.

The account selection control for an embodiment of the present invention allows selection of an account in a pull-down list format. In financial transactions, the control shows the product name, the account number, a balance descriptor and the appropriate balance, each separated by single spaces. In non-financial transactions, just the product name and number are shown. The account selection control shows only those products applicable to the transaction in which it appears, as defined by the application.

With regard to calculated values for an embodiment of the present invention, wherever a field is set to automatically calculate a value based on user input, such as the 'Total' field in a multiple payment form, that field is set not to allow input (usually by passing focus to the next field on the form). An interval timer is used to update such fields in addition to the change events of the fields upon which they depend, because users often leave the cursor in the last input field until the transaction is submitted, with the effect that the calculated field never shows a correct value.

An important aspect for an embodiment of the present invention is error handling. From a user interface perspective, error messages fall into two main categories, which include those generated by scripts at the browser before any input is submitted to the server and those returned by the server or host applications. Local script error messages generally refer to missing or invalid selections or input and are always displayed as a modal alert box with a single 'OK' button explaining the error. When the alert box is dismissed, the relevant field is given focus. User input is never altered by an error handler, but left as the user entered it. In an embodiment of the present invention, server and host error messages come in three main types, including recoverable errors, end-of-transaction errors, and end-of-session errors. Recoverable errors include errors, such as insufficient funds, where users can rectify the situation by amending their input. Recoverable errors can be explained in a modal alert box displayed over a pre-filled copy of the completed input form. After dismissing the alert, the user can choose to modify the offending input or cancel the transaction. When there are multiple input forms, the error message is displayed over the input form that contains the first field that could correct the error, if detectable. When the alert box is dismissed, the relevant field is given focus. Where error messages are presented as full-screen messages in the work area with an 'OK' link, clicking on the link transitions to the screen where input needs to be modified. User input is never removed or altered by an error handler, but left as the user entered it.

In an embodiment of the present invention, end-of-transaction errors include errors, such as "transaction not allowed", where the user is not able to successfully execute the transaction during the current session. End-of-transaction errors are explained by a message in the work area itself, rather than an alert or dialog box, with a single 'OK' link that returns the user to the menu or channel home screen from which the transaction was selected. End-of-session errors include errors, such as PIN retry limit exceeded or a fatal server application error, where the user cannot continue with the current session. A message in the work area explains end-of-session errors. When the alert is dismissed, the sign-off function is invoked to provide the option of a summary record if possible and applicable.

With regard to error message layout for an embodiment of the present invention, error text for modal dialog boxes are left justified and not padded with spaces for a centered appearance. A blank line (two line break characters) is placed after the first sentence of the message and before any final question for greater clarity. Examples include: "Your transfer request has not been completed.", "If you do not complete it, your transfer will not be processed.", and "Discard this transfer request?".

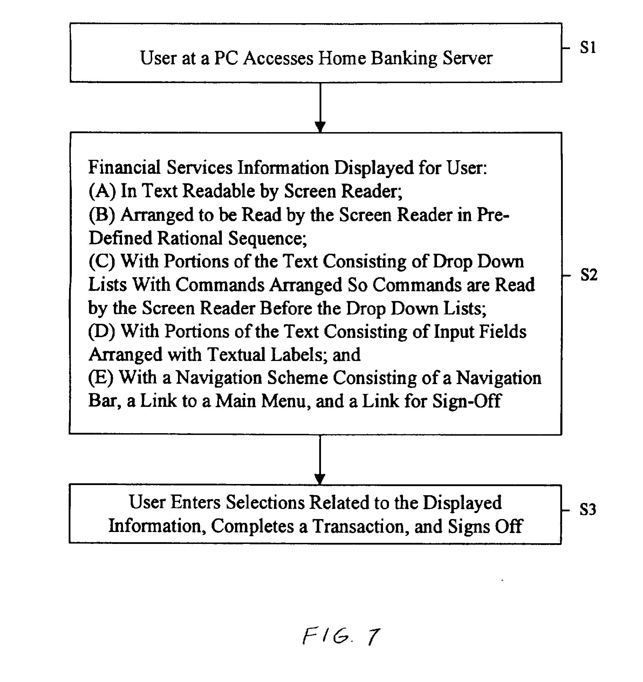

Fig. 7 is a flow chart which illustrates an example of the process of delivering financial services information to a user at a PC with a screen reading device for an embodiment of the present invention. Referring to Fig. 7, at S1, the user at the user's PC accesses the financial institution's home banking server over the Internet. At S2, financial services information is displayed for the user on a display screen of the user's PC exclusively in text readable by the screen reading device. At S2, the displayed text is arranged to be read by the reading device in a pre-defined rational sequence for the user.

Referring to Fig. 7, in addition, at S2, portions of the displayed text consisting of drop down lists with commands are arranged such that the commands are read for the user by the reading device in advance of the drop down lists. Further, at S2, portions of the displayed text consisting of input fields with textual labels are arranged to associate the textual labels with the input fields for the user by the reading device. Still further, at S2, a navigation scheme is provided for the user to navigate the displayed financial services information, consisting at least in part of a navigation bar, a link to a main menu, and a link for sign off. At S3, the user is allowed to enter selections related to the displayed financial services information using the input fields of the displayed text and an input device of the terminal.

Another aspect of an embodiment of the present invention is, for example, the use of similar techniques in connection with screen readers on automatic teller machines (ATMs) or customer access terminals (CATs). The techniques for an embodiment of the present invention of delivering information in a financial institution's home banking product such that it can be easily and efficiently read by a screen reader product, as well as for simplifying overall navigation, apply equally, for example, to the touchscreen of an ATM or CAT. These techniques, coupled with increased font sizes and contrast in terms of the color of the font and the background of a touchscreen-based ATM, makes the touchscreen easily and efficiently readable by a screen reader and simple to navigate by someone who is visually impaired.

Various preferred embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the spirit and scope of the present invention. Accordingly, the invention is limited only by the following claims.

## Claims

**1.** A method of delivering financial services information to a user at a terminal with a screen reading device, comprising:
displaying financial services information on a display screen of the terminal in text readable by the screen reading device for the user;
arranging the displayed text to be readable by the screen reading device in a pre-defined rational sequence for the user;
providing a single, consistent navigation scheme for the user to navigate the displayed financial services information; and
receiving a selection for the user at the terminal related to the displayed financial services information.

**2.** The method of claim 1, wherein displaying the financial services information on the display screen of the terminal further comprises displaying the information on the display screen of a computing device.

**3.** The method of claim 2, wherein displaying the information on the display screen of the computing device further comprises displaying the information on the display screen of the computing device coupled to a home banking server.

**4.** The method of claim 3, wherein displaying the information on the display screen of the computing device further comprises displaying the information on the display screen of the computing device coupled to the home banking server over a network.

**5.** The method of claim 4, wherein displaying the information on the display screen of the computing device further comprises displaying the information on the display screen of the computing device coupled to the home banking server over a global network.

**6.** The method of claim 1, wherein displaying the financial services information on the display screen of the terminal further comprises displaying the information on the display screen of an automatic teller machine.

**7.** The method of claim 6, wherein displaying the information on the display screen of the automatic teller machine further comprises displaying the information on the display screen of the automatic teller machine coupled to a host server.

**8.** The method of claim 7, wherein displaying the information on the display screen of the automatic teller machine further comprises displaying the information on the display screen of the automatic teller machine coupled to a host server over a network.

**9.** The method of claim 8, wherein displaying the information on the display screen of the automatic teller machine further comprises displaying the information on the display screen of the automatic teller machine coupled to the host server over a global network.

**10.** The method of claim 1, wherein displaying the financial services information on the display screen of the terminal further comprises displaying the information on the display screen of the terminal coupled to a server.

**11.** The method of claim 1, wherein displaying the financial services information in text readable by the screen reading device further comprises displaying all controls in the financial services information exclusively in text readable by the screen reading device.

**12.** The method of claim 1, wherein arranging the displayed text to be readable by the screen reading device in the pre-defined rational sequence further comprises arranging the displayed text to be readable by the screen reading device to make semantic sense to the user.

**13.** The method of claim 1, wherein arranging the displayed text to be readable in the pre-defined rational sequence further comprises arranging the displayed text to be readable by the screen reading device in at least one of a top to bottom and a left to right sequence on the display screen.

**14.** The method of claim 1, wherein arranging the displayed text to be readable in the pre-defined rational sequence further comprises arranging the displayed text to be readable by the screen reading device in a top to bottom and a left to right sequence on the display screen.

**15.** The method of claim 1, wherein arranging the displayed text to be readable in the pre-defined rational sequence further comprises arranging portions of the displayed text consisting of a drop down list with a command such that the command is read for the user by the screen reading device in advance of the drop down list.

**16.** The method of claim 1, wherein arranging the displayed text to be readable in the pre-defined rational sequence further comprises arranging portions of the displayed text consisting of an input field with a textual label to associate the textual label with the input field for the user by the screen reading device.

**17.** The method of claim 16, wherein arranging portions of the displayed text consisting of an input field with a textual label further comprises arranging the portions of the displayed text with the textual label to the left of the input field to associate the textual label with the input field for the user by the screen reading device.

**18.** The method of claim 1, wherein arranging the displayed text to be readable in the pre-defined rational sequence further comprises omitting hyphens from the displayed text.

**19.** The method of claim 1, wherein arranging the displayed text to be readable in the pre-defined rational sequence further comprises omitting parentheses from the displayed text.

**20.** The method of claim 1, wherein providing the single, consistent navigation scheme further comprises displaying a minimum number of frames on the display screen of the terminal for the user.

**21.** The method of claim 20, wherein displaying the minimum number of frames further comprises displaying a single frame layout on the display screen of the terminal for the user.

**22.** The method of claim 20, wherein displaying the minimum number of frames further comprises displaying a two-frame layout on the display screen of the terminal for the user.

**23.** The method of claim 22, wherein displaying the two-frame layout further comprises displaying the two-frame layout consisting of a navigation frame and a work area frame on the display screen of the terminal for the user.

**24.** The method of claim 23, wherein displaying the two-frame layout further comprises displaying the two-frame layout consisting of a top navigation frame and a bottom work area frame on the display screen of the terminal for the user.

**25.** The method of claim 1, wherein providing the single, consistent navigation scheme further comprises providing the navigation scheme consisting at least in part of at least one of a navigation bar, a link to a main menu, and a link for sign off.

**26.** The method of claim 25, wherein providing the navigation scheme further comprises displaying a screen with the navigation scheme consisting at least in part of at least one of the link to the main menu and the link for sign off at the top of the screen.

**27.** The method of claim 1, wherein receiving the selection further comprises receiving the selection for the user at the terminal via an input field of the displayed text and an input device of the terminal.

**28.** The method of claim 27, wherein receiving the selection further comprises receiving the selection for the user at the terminal via the input field and a keyboard input device of the terminal.

**29.** The method of claim 28, wherein receiving the selection further comprises receiving the selection for the user at the terminal via the input field exclusively with keyboard commands on the keyboard input device.

**30.** The method of claim 1, wherein receiving the selection further comprises receiving the selection for the user for at least one task related to the displayed financial services information selected from a group of tasks consisting of signing on for a session, verifying clearance of a check, scheduling a transfer of funds, paying a bill, and ending a session.

**31.** The method of claim 1, further comprising providing a templating scheme for displaying and arranging the text, for providing the navigation scheme, and for receiving the selection for a visually impaired user.

**32.** A system for delivering financial services to a user, comprising:
a terminal with a display screen and a screen reading device for displaying financial services information in text readable by the screen reading device for the user;
means for arranging the displayed text to be readable by the screen reading device in a pre-defined rational sequence for the user;
means for providing a single, consistent navigation scheme for the user to navigate the displayed financial services information; and
an input device of the terminal for receiving a selection for the user related to the displayed financial services information.

**33.** The system of claim 32, wherein the terminal further comprises a computing device.

**34.** The system of claim 33, wherein the computing device is coupled to a home banking server.

**35.** The system of claim 34, wherein the computing device is coupled to the home banking server over a network.

**36.** The system of claim 35, where the computing device is coupled to the home banking server over a global network.

**36.** The system of claim 32, wherein the terminal further comprises an automatic teller machine.

**37.** The system of claim 36, wherein the automatic teller machine is coupled to a host server.

**38.** The system of claim 37, wherein the automatic teller machine is coupled to the host server over a network.

**39.** The system of claim 38, wherein the automatic teller machine is coupled to the host server over a global network.

**40.** The system of claim 32, wherein the means for arranging the displayed text further comprises a templating scheme for a visually impaired person.

**41.** The system of claim 40, wherein the templating scheme further comprises the templating scheme with the displayed text arranged to be readable by the screen reading device to make semantic sense to the user.

**42.** The system of claim 40, wherein the templating scheme further comprises the templating scheme with the displayed text arranged to be readable by the screen reading device in at least one of a top to bottom and a left to right sequence on the display screen.

**43.** The system of claim 40, wherein the templating scheme further comprises the templating scheme with the displayed text arranged to be readable by the screen reading device in a top to bottom and a left to right sequence on the display screen.

**44.** The system of claim 40, wherein the templating scheme further comprises the templating scheme with portions of the displayed text consisting of a drop down list with a command arranged such that the command is read for the user by the screen reading device in advance of the drop down list.

**45.** The system of claim 40, wherein the templating scheme further comprises the templating scheme with portions of the displayed text consisting of an input field with a textual label arranged to associate the textual label with the input field for the user by the screen reading device.

**46.** The system of claim 45, wherein the templating scheme further comprises the templating scheme with portions of the displayed text consisting of the input field with the textual label arranged with the textual label to the left of the input field to associate the textual label with the input field for the user by the screen reading device.

**47.** The system of claim 40, wherein the templating scheme further comprises the templating scheme with hyphens omitted from the displayed text.

**48.** The system of claim 40, wherein the templating scheme further comprises the templating scheme with parentheses omitted from the displayed text.

**49.** The method of claim 32, wherein the means for providing the single, consistent navigation scheme further comprises a templating scheme for a visually impaired person with a minimum number of frames displayed on the display screen of the terminal for the user.

**50.** The method of claim 49, wherein the templating scheme further comprises a single frame layout displayed on the display screen of the terminal for the user.

**51.** The method of claim 49, wherein the templating scheme further comprises a two-frame layout displayed on the display screen of the terminal for the user.

**52.** The method of claim 51, wherein the templating scheme further comprises the two-frame layout consisting of a navigation frame and a work area frame displayed on the display screen of the terminal for the user.

**53.** The method of claim 52, wherein the templating scheme further comprises the two-frame layout consisting of a top navigation frame and a bottom work area frame displayed on the display screen of the terminal for the user.

**54.** The method of claim 32, wherein the means for providing the single, consistent navigation scheme further comprises a templating scheme for a visually impaired person with at least one of a navigation bar, a link to a main menu, and a link for sign off displayed on the display screen for the user.

**55.** The method of claim 54, wherein the templating scheme further comprises the templating scheme with at least one of the link to the main menu and the link for sign off displayed at the top of the display screen for the user.

**56.** The method of claim 32, wherein the input device further comprises a keyboard input device of the terminal.
